# EUROPEAN PATENT APPLICATION

(11) **EP 2 784 774 A1**
(43) Date of publication of application: **01.10.2014**
(21) Application number: 14305454.2
(22) Date of filing: 28.03.2014
(51) Int. Cl.: G10L 15/22, G10L 15/32, G10L 15/30

(54) **Telephone voice personnal assistant**

(30) Priority: 29.03.2013 US 201361806760 P
(71) Applicant: Orange, 75015 Paris (FR)
(72) Inventor: Yu, Dachuan, REDWOOD CITY, CA California CA 94065 (US); Benko, John, SAN FRANCISCO, CA California CA 94114 (US); Jain, Akshay, FOSTER CITY, CA California CA94404 (US); Nahon, Georges, SAN FRANCISCO, CA California CA94107 (US)

(57) **Abstract**

A system and associated method are provided for using a voice activated voice personal assistant (VPA) for a first user equipment, comprising: detecting establishment of a voice communication with a second user equipment; monitoring the voice communications using the VPA for commands relevant to the VPA; identifying, by the VPA, the commands within the voice communication; and implementing an action related to the commands during the ongoing voice communication.

## Description

### BACKGROUND

Disclosed herein is a telephone voice personal assistant (VPA) that can assist a user by permitting natural language to be used during a telephone call.

Voice recognition technology has been around for many years, and in recent years, it has been applied to telephone devices. Notably, the Siri software has been integrated into Apple's iPhone devices, and permits users to issue a number of commands to the device using natural voice commands.

Although Siri and similar software has expanded the voice functionality of telephone devices, a particularly difficult problem has been the use and interpretation of such commands during a telephone conversation. In other words, most smartphones take on dual roles (making telephone calls and act as a mini-computing device), but are not able to do both at the same time using voice UI. The difficulty in doing this is in determining when commands are being given, versus when spoken words are being used as a part of the telephone conversation. Furthermore, speech recognition on a mobile device is very expensive, as speech recognition is a demanding (in terms of resources) application.

### SUMMARY

According to various embodiments of the invention disclosed herein, a VPA is provided that allows spoken commands to be used to control the device while the user is in the middle of a telephone conversation.

A system and associated method are provided for using a voice activated voice personal assistant (VPA) for a first user equipment, comprising: detecting establishment of a voice communication with a second user equipment; monitoring the voice communications using the VPA for commands relevant to the VPA; identifying, by the VPA, the commands within the voice communication; and implementing an action related to the commands during the ongoing voice communication.

### DESCRIPTION OF THE DRAWINGS

Various embodiments of the invention are illustrated in the following drawings:
- Figure 1: is a block diagram illustrating the VPA smartphone and interfaces; and
- Figure 2: is a state diagram illustrating the various states of the VPA.

### DETAILED DESCRIPTION

A natural language VPA is provided below that greatly enhances the use of voice commands on a telephone/smartphone device.

The VPA disclosed herein is a new user interface that uses a natural language conversation style that is barge-in capable (i.e., allows the user to interrupt the system during a response) and multi-modal (i.e., allow a user to use a touch screen for the user interface at the same time as using a natural language conversation style UI-e.g., touching a map and indicating via voice to "find a restaurant near here"). It is designed to be context aware and is able to learn from use. Some example contexts relate to location of a user or desired place, scheduling and calendar events, information in a contact list, motion of the device, connectivity, device settings, and other functions associated with a mobile device. Since the device has context about the user, it can assist with complex tasks-since it knows the location of the user, etc.

The VPA may also obtain context from a user's preferences, mobile phone usage history, information from social networks, to-do lists, calendars, and emails. The VPA may also learn about the user based on network information or call detail record (CDR) analytics, etc. Based on such information, The VPA can adapt itself to provide pertinent and personalized assistance to the user. It preferably provides the ability for connection and integration with third-party services, such as web searching, social network updates and the like.

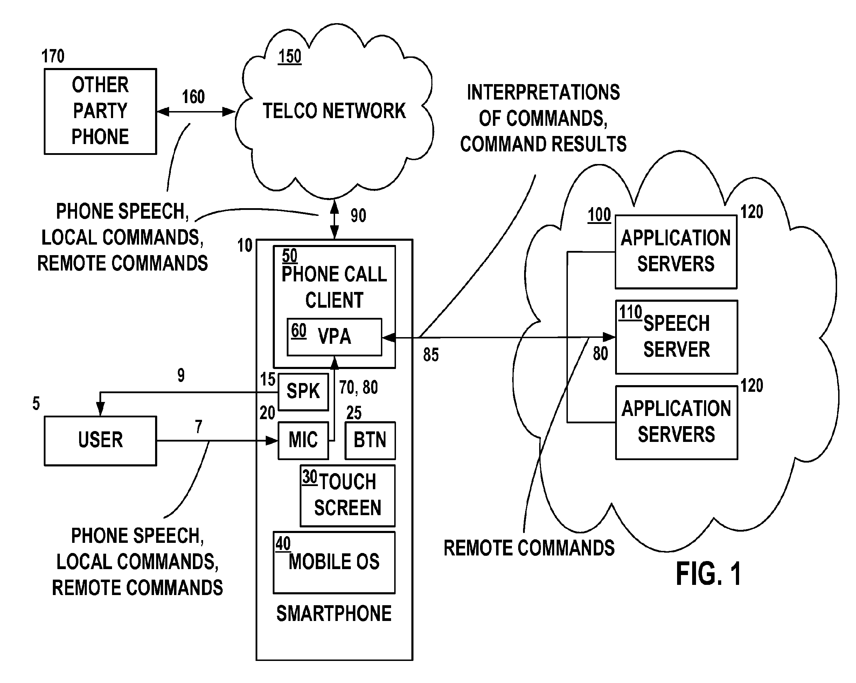

Figure 1 illustrates an embodiment of the VPA smartphone 10 (generically, a first user equipment). As with any telephone, a user 5 can input a voice audio signal 7 into a microphone 20, and receive an audio signal back 9 from a speaker 15. The smartphone comprises a touch screen 30, a mobile operating system 40, and a phone call client 50 that serves to connect the user to another party's phone 170 over the telephone company network 150.

In an embodiment of the inventive phone 10, a VPA 60 is provided that can assist the user by dealing with various commands. These commands can be local commands 70 that are interpreted and handled by the VPA 60, or remote commands 80 that are passed on to a speech server 110, located in a cloud 100. In addition, the VPA 60 can interact with various applications 120, particularly once it has received an interpretation of speech received from the speech server110 (or locally obtained and processed speech)

These remote applications 120 could include applications such as a calendar/scheduling application, media server application, etc. The commands are broken down into local commands and remote commands, since speech recognition is expensive and demanding to implement on a mobile device. Thus, local commands are preferably those that can be interpreted with little demand on a processor, and the remote commands are those that benefit from a more powerful processor for interpretation.

The smartphone 10 can pass along phone speech, local commands 70, remote commands 90, as well as prompts from the VPA 60, if it is not in whisper mode, through the telephone company network 150 to another party's phone 170 (generically, a second user equipment). When the VPA is acting in a whisper mode, only the phone speech is passed along to the other party's phone 170. When operating in a whisper mode, upon the trigger of voice commands (either a wake-up phrase or a button), the phone call client can suspend the transmission of voice or goes on mute. Similarly, the other party's phone 170 can pass along phone speech, local commands, and remote commands 160, although the latter two are passed along only when the smartphone 10 permits an external user to issue commands to the VPA 60 for execution.

In one embodiment, the only local command 70 recognized interpreted and handled by the VPA 60 is a wake-up command. It should be noted that the wake-up command is a separate type of local command 70 (technically in a completely separate class), because the VPA 60 needs to listen for it all the time. This is typically done using special hardware. In contrast, a normal local command (e.g., simple voice commands on Android) do not require the VPA to be "always listening." Once recognition is triggered either by a wake-up phrase or a button, normal local commands 70 can be handled by software, which instructs the VPA 60 to begin listening for commands so that any other commands, which are remote commands 80, are streamed or sent. Besides streaming, it is also possible for the VPA 60 to save the voice command in an audio file to be sent to the speech server]] to the speech server, preferably over a second voice, or preferably, a data channel such as a 3G, 4G, or WiFi channel (which differs from the first voice channel that is used for the telephone call. The speech server 110 performs the speech analysis and passes back to the VPA 60 interpretations of commands (the command translated from voice into some sort of instruction or token, with parameters, that can be easily understood and acted upon by the VPA 60) and possibly command results 85. The VPA 60 can then act on these interpretations of commands 85. In place of a wake-up command, a button 25 could be pressed to trigger the VPA 60 to be in an operative mode. A touch screen 30 may be provided in addition to, or in place of the button 25-i.e., the button could be implemented as a soft button on the screen 30. The touch screen 30 could also be used to enter additional information into the smartphone 10.

Although this is the simplest embodiment for the VPA 60, it may make more sense to expand the number of local commands 70. For example, and additional local command could be used to terminate the VPA 60 from listening for commands (i.e., a "go to sleep" command). Furthermore, an even more involved set of local commands 70 could be enlisted-particularly those in which a fairly simple interpretation can ensue (e.g., those with no parameters, potential ambiguities, or requiring accessing and processing of significant amounts of data). There will be a tradeoff in terms of the number and scope of local commands 70 that can be implemented in the VPA 60, versus those remote commands 80 that are interpreted in the remote speech server 110. A flag or other type of designator could be used to delineate local commands 70 from remote commands 80. Of significance is the delineation between the handling and interpretation of local commands 70 at the VPA 60, versus the streaming or sending of the remote commands 80 to the speech server 110 for interpretation.

Operation of the VPA can be analyzed according to its timing relationship with a telephone call, namely: 1) before a call (while connecting or right after picking up an incoming call); 2 during a call; 3) after a call; and 4) other times (when not calling). These are discussed in more detail below.

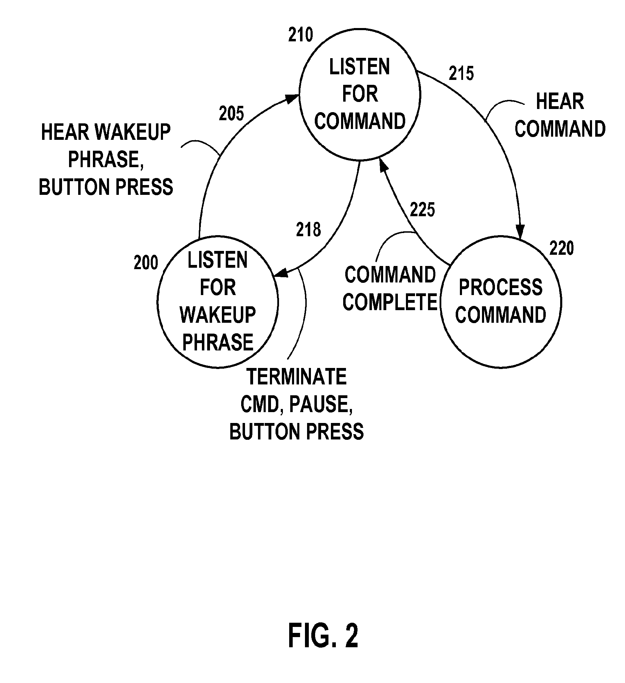

Figure 2 is a state diagram that shows the various states of the VPA 60 in an embodiment. Here, the VPA 60 starts out in a sleep state, or a "listen for wakeup phrase" state 200 (this naming also includes the equivalent of a "wait for button press" or other element for transitioning out of a sleep state for the VPA 60). Once the wakeup phrase is heard (or button pressed), the VPA 60 transitions 205 into an active state, or a "listen for command" state 210. In this state, the VPA 60 is actively listening for commands, and interpreting any local commands 70 that are provided, while streaming or sending any remote commands 80 to the speech server 110. When a command is heard, the VPA 60 transitions 215 to a "process command" state 220. For a local command 70, the command is processed by a routine associated with the VPA 60. Once the processing of the command is complete, the VPA 60 transitions 225 into the "listen for command" state 210. For a remote command 80, the VPA 60 waits for the interpretation of the command 85 to come from the speech server 110, and the VPA 60 or routine associated with it executes based on the interpretation. Completion of execution causes the transition 225 back to the "listen for command" 210 state. Multiple commands can be issued without waiting for command completion (unless logic dictates that certain commands are performed sequentially), and execution threads can be utilized for each voice command.

Finally, the VPA 60 transitions 218 back to the "listen for wakeup phrase" 200 by either receiving a local terminate command, via a pause for some predetermined period of time, or via a button press.

Before a call, a user is able to obtain information about the call or callee and the related status. For example, the user can ask the VPA 60 about the cost of a call-the VPA 60 can respond with relevant information, e.g., that the call will be free because it is an "in network", or that it will be expensive due to roaming). User commands are certainly possible before a call. Nonetheless, it is prefered for the VPA 60 to show such information (e.g., cost of a call), which can be displayed along with the "caller id" information, without being asked. An example of the callee status could also be associated with the callee's social network status-for example, the VPA 60 could determine that the callee's status is "busy", and therefore might not be immediately available. It could also provide additional information about the last conversation with the contact or how frequently conversations with the contact have occurred (e.g., within some time period, such as within the last year, last month, etc.)

The VPA 60 and also provide relevant notifications, such as the status of the battery, the balance of minutes or quotas. It could also alert the user of potential calendar conflicts, such as another meeting in fifteen minutes. The VPA 60 can also provide various decisions to be made, such as whether to record or to transcribe the call. The VPA 60 can also be used to push relevant information to the callee, such as social network status. For example, the user posts status updates for others to see, and the phone calls provide another way to share the updates. If the callee's social status is "Angry", that could be very useful information for the caller to know before speaking to the callee. In addition, social network information, such as someone's birthday, can also be displayed. It can also be used to transfer content, such as pictures, videos, and links to the callee.

During the call, the VPA 60 can be either in a manual mode in which the user expressly turns on the VPA 60 via a switch, button, or some other mechanical operation, or it can be in a set to a live mode (i.e., the VPA 60 is listening). In one live mode, the VPA can be triggered with a particular wake-up action such as a phrase (e.g., "wake up") that can trigger it to begin interpreting voice commands and translating them into actions. This could be triggered in any variety of ways, such as shaking the phone a certain way, waving a hand over the phone, etc.). In an alternate embodiment, the live mode is always on, and the VPA 60 is constantly listening for particular command phrases. In the communications mode, the VPA 60 can respond in a whisper mode (i.e., a mode in which the user can here the VPA 60 responses, but not the other caller(s) or a "speaks out" mode. The VPA 60, however, does not have to audibly respond at all to the user in response to being woke up. The termination of this mode can be done by an explicit cue, such as a button press or use of a particular phrase, or a pause on the part of the user.

Actions that are performed can be based on an interpretation of the voice command. Activities that can be done using the VPA 60 while in the call can include contact searching, for example, obtaining information about someone mentioned in the call, or web searching, for example, to obtain information about a restaurant for which plans are being made. In a further example, actions related to later recall/remembering may be implemented. For example, a to-do list can be activated, and items being discussed in the call can be added-or in a variation, an action item can be added to a list. The user could instruct the VPA 60 to record the last x seconds of a call that contains information that might be useful to access later.

Activities can also be performed that relate to call functionalities, such as adding a user to a conference call, and making/receiving additional calls. In one special case scenario, when the user calls another party and the user is in the process of leaving a message for that party, the party might try to call the user during this time. The VPA 60 could ask the user if it should simply patch the party call through and terminate the message recording. In addition to all of the during call functions noted above, the before call activities can also be done during the call as well.

After the call, the VPA 60 can be utilized for contact management, such as adding or updating a contact, classifying the call as a spam call that can then trigger an alert or simply rout the call into a voice message system (or simply ignore it). Furthermore, the VPA 60 can update the priority of the caller/callee. The VPA 60 can provide statistics and notifications about the call that just occurred, and provide information about the balance of time left and/or quotas. It can solicit and retain feedback/satisfaction information from the user, and reminders, such as to-do lists, action items, minutes, and a summary can be recorded. In one embodiment, review actions are undertaken immediately after the call, such as a multi-modal UI can be entered so that the user can provide clarification on missing information. The activities indicated as before call activities can also be performed after the call as well.

Other functions can be implemented with the VPA 60 at times not associated with any particular call. These may include setup functions, such as updating voice message greetings and performing account management.

In a preferred embodiment, the VPA 60 can be interfaced to a remote assistant that can handle certain aspects of the user's commands. An example of such a system might be Wildfire by Virtuosity (www.virtuosity.com), which is a speech-activated VPA 60 service for calls. It provides services such as call answering and call routing, call screening / call announce, call whisper, call return, contacts, reminders, conferencing, and one number (a single number for all communication needs), setting up multiple lines, and advanced messaging.

In an embodiment, the VPA 60 is always listening and ready to react and respond to both sides of the conversation. Thus, in a normal conversation, the VPA 60 is listening for the wake-up phrase only. Once it hears the wake-up phrase, it begins listening for a voice command. When the voice command is heard, in an embodiment, the VPA 60 can send the voice command to a remotely located server, such as a server in the cloud, i.e., the VPA 60 can send the speech over streams to a speech server.

The cloud server can then process the command, and send an interpretation of the command to the VPA 60. The VPA 60 then carries out the task according to the interpretation it received from the cloud, such as remembering action items, remembering incomplete commands, invoking OS/network features, and the like. After the phone call, the VPA 60 can show action items to the user, and can ask for clarification on any incomplete commands, and carry out the tasks associated with the clarified commands.

In a simplistic use case, a user receives a call from his wife asking him to buy milk on the way home. During the call, the user says, "Orangee (the wake-up phrase), remind me to buy milk". When the call is over, the VPA 60 asks the user when to trigger the reminder.

During the call, additional notification can be provided to the user. For example, the VPA 60 could notify the user of a battery state (e.g., battery low), quota information (e.g., running out of call minutes), a network condition change, such as entering into a roaming state, urgent calls or messages, and the like. The VPA 60 can interact with the user as needed in these situations.

In another example, a voicemail scenario, the user can be leaving a voicemail when another incoming call is received. In this scenario, the VPA 60 helps the user to react by voice and/or touch screen interaction. The VPA 60 informs the user about the incoming call and provides relevant information relative to the incoming call (e.g., who the caller is). The VPA 60 then asks the user how to handle the incoming call (connect, drop, or hold the call), and can respond to the caller according to the handling specified. This can work even in the situation where the incoming call is from the person that the user is leaving a message with (predefined handling can also be used in this, or any other, situation, without requiring intervention by the user). The VPA 60 can be designed to perform a call-back when the user is finished leaving the message.

In another scenario, once a call has ended, at the disconnection of a call, the VPA 60 can proactively prompt the user to interact with the device via speech and/or use of the touch screen, which the VPA 60 can react to. The VPA 60 can provide the user with summary/status information about the call, such as call minutes, cost of the call, balance of minutes/quota, etc. It can also provide contact management by adding the contact if the caller was not already in the user's contacts list, or updating contact information, such as a new phone number, address, etc. It can also solicit feedback from the user, such as the user's satisfaction with the call. For example, if the call is a sales call, a positive satisfaction feedback can be provided so that particular vendor could receive preferential treatment in the future.

In another exemplary scenario (whether in a call or not), an incoming call triggers the VPA 60 to interact with the user, e.g., by providing information about the call and asking the user for decisions about handling the call. The handling could be getting the user's decision on whether to pick up the call, hold the call, send the call to voicemail, answer and record the call, answer and provide a transcript of the call, etc. The basis for how to handle the call could incorporate a number of factors discussed above, such as the cost of the call (e.g., the call is free because it is "in network", or expensive due to roaming), the battery life available, calendar conflicts, a balance/quota of minutes, statistics about the last conversation with this caller or the frequency of conversation with this caller, and the caller/callee status (e.g., social network update, "busy").

In a further exemplary scenario of an outgoing call, the user is not in a phone conversation and explicitly launches the VPA 60 (via, e.g., a wake-up phrase or a hard/soft button press). In this scenario, the VPA 60 listens to a user command and reacts to it. The user issues a voice command about calling someone and performing another task at the same time. The VPA 60 can send the voice command to cloud for processing and receives interpretation of the command. The VPA 60 then carries out the task based on the received interpretation. For example, the VPA 60 can call the requested individual while at the same time pushing/pulling information.

For example, the VPA 60 could be instructed, "Call John about lunch, share this picture with John, and get his update". In response, the VPA 60 could dial John's phone, and at the same time transmit the indicated picture either to John's smart phone or some other social media location, as well as obtain John's social network status.

In a scheduled call example, the user launches the VPA 60, and then issues a voice command to call John at a particular time (e.g., 8:00pm on April 1, 2013). The VPA 60 sends the voice command to the cloud for processing and receives the interpretation from the cloud. The VPA 60 then carries out the task based on the interpretation, i.e., at the appointed time of 8:00pm on April 1, 2013, it can initiate the phone call, possibly with a notice to the user, e.g., by ringing the user device in the same way as an incoming call, just before making the call to ensure that the user is available. The VPA 60 could prompt the user for how to respond if the user is in a call at the designated time. The above can also apply to scheduling and making a conference call via a bridge.

In the operation modes, including the different operation modes (those not specifically associated with a call), there are different ways to initiate the VPA 60, some of which have been previously discussed. The VPA 60 can always be listening for a command, or can listen for a command upon some sort of trigger. These triggers can include a wake-up phrase, pressing of a hardware or software button (or some other form of physical interaction with the device), upon receiving an incoming call, according to a timer or scheduled tasks, receipt of an urgent notification, a network status change or a device status change.

A voice command can be "whispered" to the VPA 60 (i.e., communicated via a separate channel when the VPA 60 is triggered so the callee does not hear the command) or issued in a "speaks out" mode (one in which the other party hears the command as well. Similarly, the VPA 60 can respond in a "whisper" mode or a "speaks out" mode. The VPA 60 can listen to the user only or both the user and the other party. It can also interact with the user only or both the user and the other party. These can be done in any combination. For example, the VPA 60 can listen to both the user and other party, but can react to the user only.

A final use case is included to illustrate various aspects according to an embodiment of the invention. In a first step, Dachuan issues a voice command to the smartphone: "Call John about Lunch". While dialing, as Dachuan is on the smartphone hands-free, John's Facebook timeline is shown on screen for Dachuan to browse (possibly incorporating the statistics from the last call with John). Dachuan sees that today is John's birthday, which he had previously forgotten. However, with this reminder, he now can say that the lunch is to celebrate John's birthday. John's phone is in his jacket pocket on vibrate, and he does not detect this call. But since John is logged into gTalk, he also gets a message: "Dachuan is now calling your cell phone about Lunch".

John removes phone from his jacket and sees on the display, "Dachuan is calling about Lunch", and a notification that Dachuan's birthday was last week. But John notes that he forgot to wish Dachuan a Happy Birthday. John picks up the call with a hand-free mode of operation and sees Dachuan's Facebook timeline. Dachuan wishes John a happy birthday and asks if he already has lunch plans for today. John says "Not yet - lunch would be great - how about 12:15pm". Dachuan says, "OK for 12:15pm - where do you want to eat? Shall I invite some of our friends?"

A button that triggers the VPA 60 into active mode is pressed by Dachuan, and he says to the VPA 60: "See if our friends are interested in lunch today downtown at 12:15pm to celebrate John's birthday". The application looks at mutual friends online on Facebook in the area, and send them a notification to see if they want to join Dachuan and John for Lunch to celebrate John's Birthday. If they respond in the next few minutes, a message is sent to Dachuan and John confirming.

John says, "Sure. Hmm... where to go (pause).Lets go to Rosa Mexicano". Dachuan says: "Great!", and presses the button to put the VPA 60 in an active mode, and says "Let's schedule your Birthday Lunch at 12:15 at Mixed Greens". Both John's and Dachuan's calendars are updated, and a message is sent to an initial mutual fried list updating the restaurant to Rosa Mexicano. As soon as the friends respond John and Dachuan are notified.

In this way, communications can be significantly enhanced between parties.

The system or systems described herein may be implemented on any form of computer or computers and the components may be implemented as dedicated applications or in client-server architectures, including a web-based architecture, and can include functional programs, codes, and code segments. Any of the computers may comprise a processor, a memory for storing program data and executing it, a permanent storage such as a disk drive, a communications port for handling communications with external devices, and user interface devices, including a display, keyboard, mouse, etc. When software modules are involved, these software modules may be stored as program instructions or computer readable codes executable on the processor on a non-volatile computer-readable media such as read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion. This media is readable by the computer, stored in the memory, and executed by the processor.

All references, including publications, patent applications, and patents, cited herein are hereby incorporated by reference to the same extent as if each reference were individually and specifically indicated as incorporated by reference and were set forth in its entirety herein.

For the purposes of promoting an understanding of the principles of the invention, reference has been made to the preferred embodiments illustrated in the drawings, and specific language has been used to describe these embodiments. However, no limitation of the scope of the invention is intended by this specific language, and the invention should be construed to encompass all embodiments that would normally occur to one of ordinary skill in the art.

Embodiments of the invention may be described in terms of functional block components and various processing steps. Such functional blocks may be realized by any number of hardware and/or software components that perform the specified functions. For example, the embodiments may employ various integrated circuit components, e.g., memory elements, processing elements, logic elements, look-up tables, and the like, which may carry out a variety of functions under the control of one or more microprocessors or other control devices. Similarly, where the elements are implemented using software programming or software elements, embodiments of the invention may be implemented with any programming or scripting language such as C, C++, Java, assembler, or the like, with the various algorithms being implemented with any combination of data structures, objects, processes, routines or other programming elements. Functional aspects may be implemented in algorithms that execute on one or more processors. Furthermore, embodiments of the present invention could employ any number of conventional techniques for electronics configuration, signal processing and/or control, data processing and the like. The words "mechanism" and "element" are used broadly and are not limited to mechanical or physical embodiments, but can include software routines in conjunction with processors, etc.

The particular implementations shown and described herein are illustrative examples of the invention and are not intended to otherwise limit the scope of the invention in any way. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. Moreover, no item or component is essential to the practice of the invention unless the element is specifically described as "essential" or "critical".

The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The use of the terms "a" and "an" and "the" and similar referents in the context of describing the invention (especially in the context of the following claims) should be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein are performable in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed.

## Claims

1. A method of using a voice activated voice personal assistant (VPA) for a first user equipment, the method comprising:
detecting establishment of a voice communication with a second user equipment;
monitoring the voice communications using the VPA for commands relevant to the VPA;
identifying, by the VPA, the commands within the voice communication; and
implementing an action related to the commands during the ongoing voice communication.

2. The method according to claim 1, wherein the commands comprise a local command in which the local command is interpreted and executed by the VPA.

3. The method according to claim 2, wherein the local command is a wake-up command that the VPA always monitors for when not in an active mode that instructs the VPA to enter into an active mode in which the VPA is:
actively monitoring the voice communication for remote commands that are not interpreted by the VPA; and
streaming the remote commands to a remote speech server connected to the first user equipment via a network for interpretation.

4. The method according to claim 3, further comprising:
sending an interpretation of the remote command from the remote speech server to the first user equipment;
receiving the interpretation by the first user equipment; and
implementing a further action related to the received interpretation by the VPA.

5. The method according to claim 3, further comprising:
operating in a whisper mode in which local commands and remote commands are not communicated to the second user equipment.

6. The method according to claim 3, further comprising:
obtaining further information from a non-audio user interface element of the first user equipment in a multi-modal operation to provide clarification on missing information.

7. The method according to claim 3, further comprising:
interacting with an integrated third party application by the VPA.

8. The method according to claim 7, wherein the third party application is selected from the group consisting of: web searching, social network updating, calendar scheduling, and a media server.

9. The method according to claim 3, wherein the action or further action is selected from the group consisting of: alerting a user of calendar conflicts, pushing content to the second user equipment, pulling content from the second user equipment, recording the voice communications, transcribing the voice communications, activating a to-do list, adding a user to a conference call, responding to a further incoming call, call screening, contact management, adding a reminder, and saving feedback.

10. The method according to claim 3, wherein the local and remote commands are identified only from the voice communications originating from the first user equipment.

11. The method according to claim 3, further comprising:
transitioning to a sleep mode when a user interface element has been engaged.

12. The method according to claim 3, further comprising:
implementing a further local command that is a sleep command that instructs the VPA to enter into a sleep mode in which the VPA is not actively monitoring voice communications for remote commands.

13. The method according to claim 1, further comprising:
operating a user element that instructs the VPA to enter into an active mode in which the VPA is:
actively monitoring the voice communication for remote commands that are not interpreted by the VPA; and
streaming the remote commands to a remote speech server connected to the first user equipment via a network for interpretation.

14. A voice activated voice personal assistant (VPA) for a first user equipment, comprising:
a detector that detects establishment of a voice communication with a second user equipment;
a monitoring unit that monitors the voice communications using the VPA for commands relevant to the VPA;
an identification unit that identifies the commands within the voice communication; and
a controller that implements an action related to the commands during the ongoing voice communication.

15. A non-transitory computer program product, comprising a computer usable medium having a computer readable program code embodied therein, said computer readable program code adapted to be executed to implement the method according to one of the claims 1 to 13.
